Europäisches Patentamt

European Patent Office

Office européen des brevets

(19)

(11) Veröffentlichungsnummer: **0 130 274**
**B1**

(12) **EUROPÄISCHE PATENTSCHRIFT**

(45) Veröffentlichungstag der Patentschrift:
10.01.90

(51) Int. Cl.⁴: **C 01 B 4/00, B 01 D 59/28**

(21) Anmeldenummer: **84101943.3**

(22) Anmeldetag: **24.02.84**

(54) Verfahren zur Abtrennung von Deuterium und Tritium aus Wasser unter Verwendung von Ammoniak bzw. eines Wasserstoff-Stickstoff-Gemisches.

(30) Priorität: **05.05.83 CH 2453/83**

(43) Veröffentlichungstag der Anmeldung:
**09.01.85 Patentblatt 85/2**

(45) Bekanntmachung des Hinweises auf die Patenterteilung:
**10.01.90 Patentblatt 90/2**

(84) Benannte Vertragsstaaten:
**DE FR GB IT**

(56) Entgegenhaltungen:
**CH-A- 567 431**
**FR-A- 2 008 061**
**GB-A- 892 087**
**US-A- 3 437 442**

(73) Patentinhaber: **GEBRÜDER SULZER AKTIENGESELLSCHAFT, Zürcherstrasse 9, CH-8401 Winterthur (CH)**

(72) Erfinder: **Mandrin, Charles, Dr., Im Laubegg 7, CH-8406 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123 Postfach 14 02 68, D-4000 Düsseldorf (DE)**

**Beschreibung**

Die Erfindung betrifft ein Verfahren zur Abtrennung von mindestens einem schweren Isotop einer Wasserstoff enthaltenden Verbindung oder eines Wasserstoff enthaltenden Gemisches unter Verwendung einer Ammoniaksynthese und einem Wasserstoff-Stickstoffgemisch.

Ein derartiges Verfahren ist beispielsweise aus dem Buch «NUCLEAR CHEMICAL ENGINEERING / Second Edition von M. Benedict, Th.H. Pigford und H.W. Levi / McGraw-Hill Book Company, Seite 763 bis 765, bekannt.

Bei diesem Verfahren handelt es sich um einen monothermen Ammoniak-Wasserstoff-Austauschprozeß, wobei nahezu hundertprozentig mit Deuterium angereichertes Ammoniak als Ausgangsprodukt für die Gewinnung von schwerem Wasser gewonnen werden soll. Der Austauschprozeß ist in diesem Fall mit einem Prozeß zur Gewinnung von Ammoniak aus Wasserstoff mit natürlicher Deuterium-Konzentration und Stickstoff bestehenden Synthesegas als quasi parasitärer Prozeß verbunden.

Demgegenüber hat sich die Erfindung zum Ziel gesetzt, aus Deuterium und Tritium enthaltendem Wasser sowohl Deuterium als auch Tritium mindestens weitgehend abzutrennen, um an Deuterium und Tritium verarmtes Wasser zu gewinnen.

Bei der Wasserquelle kann es sich beispielsweise um Flußwasser, um Wasser einer nuklearen Brennstoffaufbereitungsanlage oder um Kühlwasser bzw. um einen Moderator einer Atomreaktoranlage handeln.

Im Vordergrund soll bei der Erfindung die Gewinnung von Deuterium und Tritium mindestens weitgehend befreitem Wasser stehen. Tritium ist bekanntlich ein gefährlicher, radioaktiver Stoff, und bei der Verwendung von deuteriumarmem Wasser in der Landwirtschaft hat es sich gezeigt, daß derartiges Wasser wachstumsfördernd wirkt.

Als Nebenprodukte bei Isotopen-Austauschprozessen entstehen neben den an Isotopen abgereicherten Produkten an diesen Isotopen gegenüber der Speisung angereicherte Nebenprodukte.

Im vorliegenden Fall soll die Erfindung es ermöglichen, auf wirtschaftliche Weise an Deuterium und Tritium verarmtes Wasser als Hauptprodukt und an Deuterium bzw. Tritium angereicherte Nebenprodukte zu gewinnen.

Ein mit Deuterium angereichertes Nebenprodukt, z. B. Wasserstoff oder Wasser kann dann z. B. das Feed eines Prozesses üblicher Art zur Gewinnung von schwerem Wasser bilden, nachdem Tritium von dem Produkt in bekannter Weise abgetrennt worden ist. Dieses Tritium kann beispielsweise gelagert oder aber nach einer Aufkonzentrierung in bekannter Weise für Kernfusionsprozesse verwendet werden.

Da bei der Erfindung eine Ammoniaksynthese verwendet wird, hat sich die Erfindung weiterhin ein Verfahren zum Ziel gesetzt, wobei Ammoniak nicht als Produkt aus dem Prozeß herausgeführt wird, sondern nur die während des Verfahrens auftretenden Leckverluste gedeckt werden müssen.

Die der Erfindung zugrundeliegende Aufgabe wird mit Hilfe der im Kennzeichen des Anspruchs 1 angegebenen Verfahrensschritte gelöst. Die Begründung für die angegebenen Moldurchsätze von Ammoniak und Wasser wird am Ende der Beschreibung anhand eines Zahlenbeispiels erläutert.

Eine Ausführungsform der Erfindung kann darin bestehen, daß die an Deuterium und Tritium angereicherte Teilmenge des Ammoniaks verdampft und in Isotopenaustausch mit einem zweiten Wasserstrom gebracht wird, wobei das Wasser an Tritium und Deuterium angereichert und als Nebenprodukt gewonnen wird, und daß der an Deuterium und Tritium abgereicherte Ammoniakdampf verflüssigt und mit dem, aus dem ersten Verfahrensschritt stammenden Ammoniak vor seiner Aufspaltung in Wasserstoff und Stickstoff zusammengeführt wird.

Eine weitere vorteilhafte Ausführungsform der Erfindung kann darin bestehen, daß mindestens eine Teilmenge des an Deuterium und Tritium angereicherten flüssigen Ammoniaks mit einem zweiten, an Deuterium und Tritium angereicherten Gasgemisch aus Wasserstoff und Stickstoff in Isotopenaustausch gebracht wird und hierbei an Deuterium und Tritium weiter angereichert wird, wobei das zweite Gasgemisch aus der Spaltung des angereicherten Ammoniaks entstanden ist, wobei eine Teilmenge dieses Gasgemisches als an Deuterium und Tritium angereichertes Nebenprodukt anfällt, und daß die während des Isotopenaustausches an Deuterium und Tritium abgereicherte Teilmenge des Gasgemisches mit dem Gasgemisch, welches nach dem ersten Verfahrensschritt verflüssigt und in Wasserstoff und Stickstoff aufgespalten ist, zusammengeführt wird.

In Weiterbildung der Erfindung soll diese es auch ermöglichen, das Isotop $^{15}N$ als Nebenprodukt auf wirtschaftlichere Weise als bisher zu gewinnen.

Das Isotop $^{15}N$ könnte dann als Kühlgas für gasgekühlte Kernreaktoren oder als sogenanntes Deckgas für Leicht- und Schwerwasserreaktoren verwendet werden.

Bis jetzt wurden nur Kohlendioxid und Helium als Kühlgase eingesetzt und nur Helium als Deckgas für Leicht- und Schwerwasserreaktoren. Kohlendioxid ist wegen seiner chemischen Instabilität unter Strahlung nur in einem Temperaturbereich von ca. 600 bis 700 °C geeignet. Als Deckgas für Wasserreaktoren ist Kohlendioxid wegen seiner Löslichkeit in Wasser nicht verwendbar, da es eine korrosive saure Lösung bildet.

Helium ist ein teures Gas und erfordert einen hohen Dichtheitsgrad einer Anlage aufgrund seiner hohen Permeabilität.

Bisher wurde das Isotop $^{15}N$ nicht industriell eingesetzt, da es nur unter einem unwirtschaftlich hohen Kostenaufwand gewonnen werden konnte, z. B. durch Destillation von Stickstoff oder von flüssigem Ammoniak.

Die Erfindung wird im Folgenden anhand von zwei Ausführungsbeispielen erläutert.

Fig. 1 zeigt in schematischer Darstellungsweise ein Fließschema für ein Verfahren, bei welchem als Hauptprodukt an Deuterium und Tritium weitgehend verarmtes Wasser und als Nebenprodukt an Deuterium und Tritium angereichertes Wasser gewonnen wird.

Fig. 2 zeigt in schematischer Darstellungsweise ein Fließschema für ein Verfahren, bei welchem als Hauptprodukt ebenfalls weitgehend an Deuterium und Tritium verarmtes Wasser und als Nebenprodukt an Deuterium und Tritium angereicherter Wasserstoff gewonnen wird. Als weiteres Nebenprodukt wird an $^{15}N$ angereicherter Stickstoff erzeugt.

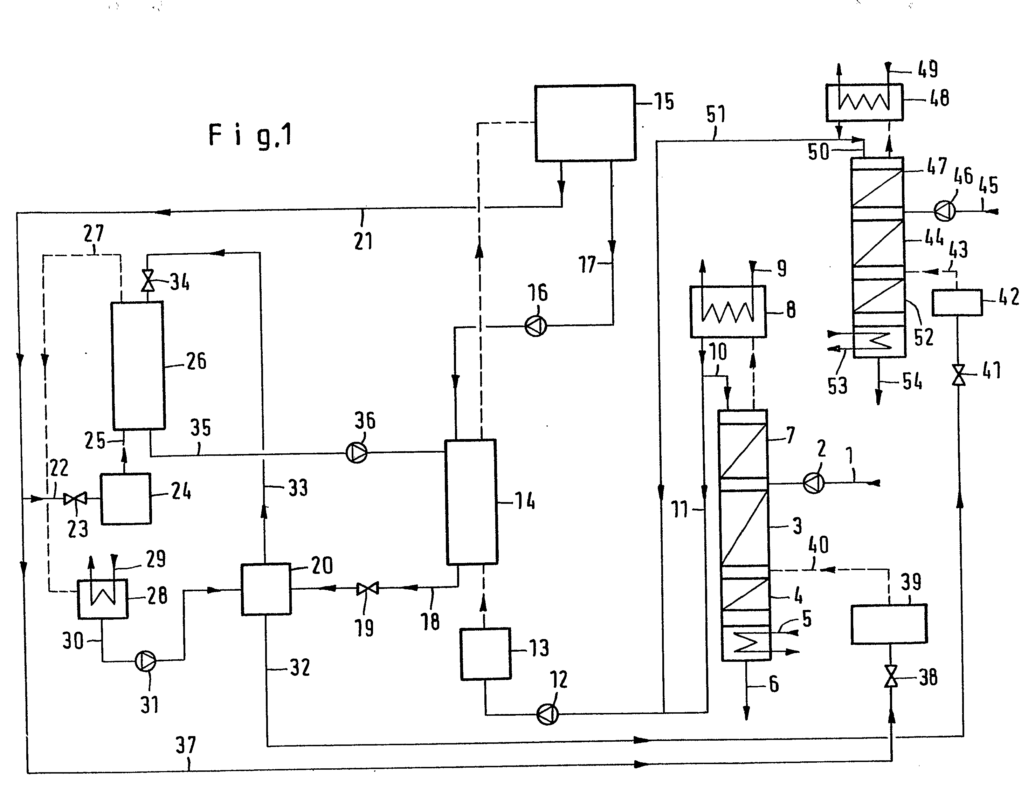

Ein Verfahren zur Gewinnung von an Deuterium und Tritium abgereicherten Wasser als Hauptprodukt und an Deuterium und Tritium angereichertem Nebenprodukt aus deuterium- und tritiumhaltigem Wasser wird gemäß Fig. 1 in der folgenden Weise durchgeführt:

Die Speisung, z.B. Flußwasser oder deuterium- und tritiumhaltiges Abwasser wird durch eine Leitung 1 mittels einer Pumpe 2 in einen Isotopenaustauschturm 3 gefördert und hierin im Gegenstrom zu an Deuterium und Tritium abgereicherten Ammoniakdampf in Isotopenaustausch gebracht.

Hierbei wird das Wasser an Deuterium und Tritium weitgehend verarmt. Dieses für landwirtschaftliche oder industrielle Zwecke dienende Wasser enthält noch gelöstes Ammoniak. Dieses ist aus Gründen des Umweltschutzes, des Ammoniakverbrauchs usw. nicht erwünscht. Deshalb wird der Ammoniakanteil in einer, an den unteren Teil des Austauschturmes 3 anschließenden Kolonne 4 entfernt, wobei der für die Abtrennung erforderliche Dampf mit Hilfe einer Wärmequelle im Sumpf der Kolonne 44 erzeugt wird. Diese Wärmequelle kann beispielsweise als eine mit Dampf beheizte Schlange 5 ausgebildet sein. Das von Ammoniak befreite Produkt wird durch eine Leitung 6 entnommen.

Der Ammoniakdampf, der den Kopfteil des Austauschturmes 3 verläßt, und dessen Konzentration an Deuterium und Tritium etwas geringer als die Konzentration des Speisewassers ist, enthält Wasserdampf, der in den weiteren Verfahrensstufen nicht vorhanden sein darf.

Daher wird der Wasserdampf in einer oberhalb des Austauschturmes 3 angeordneten Rektifikationskolonne 7 abgetrennt. Der wasserfreie Ammoniakdampf wird in einem Kondensator 8 mittels einer wassergekühlten Schlange 9 verflüssigt.

Ein Teil des Kondensats wird durch eine Leitung 10 in die Kolonne 7 als Rücklauf eingespeist. Der Hauptteil des Kondensats wird durch eine Leitung 11 mittels einer Pumpe 12 in einen Cracking-Ofen 13 gefördert und darin in bekannter Weise in ein Synthesegasgemisch ($N_2 + 3H_2$) umgewandelt. Dieses Gasgemisch wird in einen Isotopenaustauschturm 14 eingeleitet und dort im Gegenstrom zu flüssigem Ammoniak in Austausch gebracht. Dieser Isotopenaustausch kann nur dann stattfinden, wenn das flüssige Ammoniak einen gelösten Katalysator, z.B. $KNH_2$, enthält. Hierbei verarmt der Wasserstoff des Gasgemisches an Deuterium und Tritium, während sich das Ammoniak an Deuterium und Tritium anreichert.

Aus dem Gasgemisch wird dann in einer Syntheseanlage 15 Ammoniak gebildet. Der Hauptteil des an Deuterium und Tritium verarmten Ammoniaks wird mittels einer Pumpe 16 durch eine Leitung 17 in den Kopfteil des Austauschturmes 14 gefördert.

Das sich während des Austausches mit dem Synthesegasgemisch an Deuterium und Tritium anreichernde Ammoniak, in welchem ein Katalysator gelöst ist, wird durch eine Leitung 18 aus dem Austauschturm 14 entnommen, in einem Drosselventil 19 entspannt und in einen Konzentrator 20 eingeleitet.

Die restliche Teilmenge des in der Syntheseanlage 15 gebildeten Ammoniaks wird durch Leitung 21 entnommen und eine Teilmenge hiervon durch eine Leitung 22, in welcher ein Drosselventil 23 angeordnet ist, in einen Verdampfer 24 entspannt. Der aus diesem Verdampfer stammende Ammoniakdampf, der an Deuterium und Tritium verarmt ist, wird durch eine Leitung 25 in einen Austauschturm 26 eingeleitet und hierin im Gegenstrom mit flüssigem, an Deuterium und Tritium angereicherten Ammoniak in Isotopenaustausch gebracht. Der sich hierbei an Deuterium und Tritium anreichernde Ammoniakdampf wird durch eine Leitung 27 in einen Kühler 28 gefördert und dort mittels einer von Wasser durchströmten Kühlschlange 29 kondensiert. Das Kondensat wird durch eine Leitung 30 entnommen und mittels einer Pumpe 31 in den Konzentrator 20 gefördert.

Der Konzentrator 20 besteht aus einem nicht dargestellten Teilverdampfer, der aus den durch die Leitungen 30 und 18 eingespeisten Flüssigkeiten einen Katalysator freien Ammoniakdampfstrom erzeugt und aus einem nicht dargestellten Kondensator, der diesen Dampfstrom verflüssigt.

Das verflüssigte, an Deuterium und Tritium angereicherte Ammoniak wird dem Konzentrator 20 durch eine Leitung 32 entnommen.

Der im Konzentrator 20 eingebaute Teilverdampfer produziert andererseits noch eine an Katalysator und Deuterium und Tritium angereicherte Ammoniakflüssigkeit, die durch eine Leitung 33 dem Konzentrator 20 entnommen, durch ein Drosselventil 34 und in den Kopfteil des Isotopenaustauschturmes 26 entspannt wird.

Das an Deuterium und Tritium verarmte Ammoniak, welches gelösten Katalysator enthält, wird dem Austauschturm 26 am Boden durch eine Leitung 35 entnommen und mittels einer Pumpe 36 in den Austauschturm 14 gefördert.

Der durch Leitung 21 der Ammoniaksynthese 15 entnommene Ammoniakstrom wird, vermindert um die durch Leitung 22 entnommene Teilmenge, durch Leitung 37 weggeführt und durch ein Drosselventil 38 in einen Verdampfer 39 entspannt. Der an Deuterium und Tritium verarmte Ammoniakdampf wird sodann zur Einleitung des ersten Verfahrensschrittes in den Isotopenaustauschturm 3 durch eine Leitung 40 eingespeist.

Der dem Konzentrator 20 durch Leitung 32 entnommene Katalysator freie, an Deuterium und Tritium angereicherte Ammoniakdampf wird durch ein Drosselventil 41 in einen Verdampfer 42 entspannt. Von hier aus wird der Ammoniakdampf durch eine Leitung 43 in einen Isotopenaustauschturm 44 eingespeist. Am Kopf des Austauschturmes 44 wird ein zweiter Wasserstrom, der aus der gleichen Quelle wie der erste Wasserstrom stammen kann, durch eine Leitung 45 mittels einer Pumpe 46 eingespeist und im Gegenstrom analog zu dem Austauschturm 3 mit Ammoniakdampf in Isotopenaustausch gebracht. Im Gegensatz zu dem ersten Verfahrensschritt wird, da der Ammoniakdampf an Deuterium und Tritium abgereichert ist, das Wasser an Deuterium und Tritium angereichert.

Zur Abtrennung des Wasserdampfes wird der an Deuterium und Tritium verarmte Ammoniakdampf in eine Rektifikationskolonne 47 eingeleitet und der von Wasserdampf befreite Ammoniakdampf in einem Kondensator 48, in welchem eine von Kühlmittel durchströmte Schlange 49 angeordnet ist, verflüssigt. Ein Teil des Kondensats wird durch Leitung 50 als Rücklauf in die Rektifikationskolonne 47 zurückgeführt, während die wesentlich größere Menge des Kondensats durch eine Leitung 51 entnommen und mit dem aus dem Kondensator 9 durch Leitung 11 entnommenen Kondensat zusammengeführt.

Unterhalb des Austauschturmes 44 ist zur Abtrennung des im Wasser gelösten Ammoniaks eine Kolonne 52 angeordnet, wobei der für die Abtrennung erforderliche Dampf mit Hilfe einer Wärmequelle im Sumpf der Kolonne 52 erzeugt wird. Diese Wärmequelle kann beispielsweise als eine mit Dampf beheizte Schlange 53 ausgebildet sein.

Das von Ammoniak befreite, an Deuterium und Tritium angereicherte Wasser wird durch eine Leitung 54 entnommen. Dieses Wasser kann beispielsweise als Speisung einer Schwerwasserproduktionsanlage oder einer Tritium-Konzentrieranlage verwendet werden.

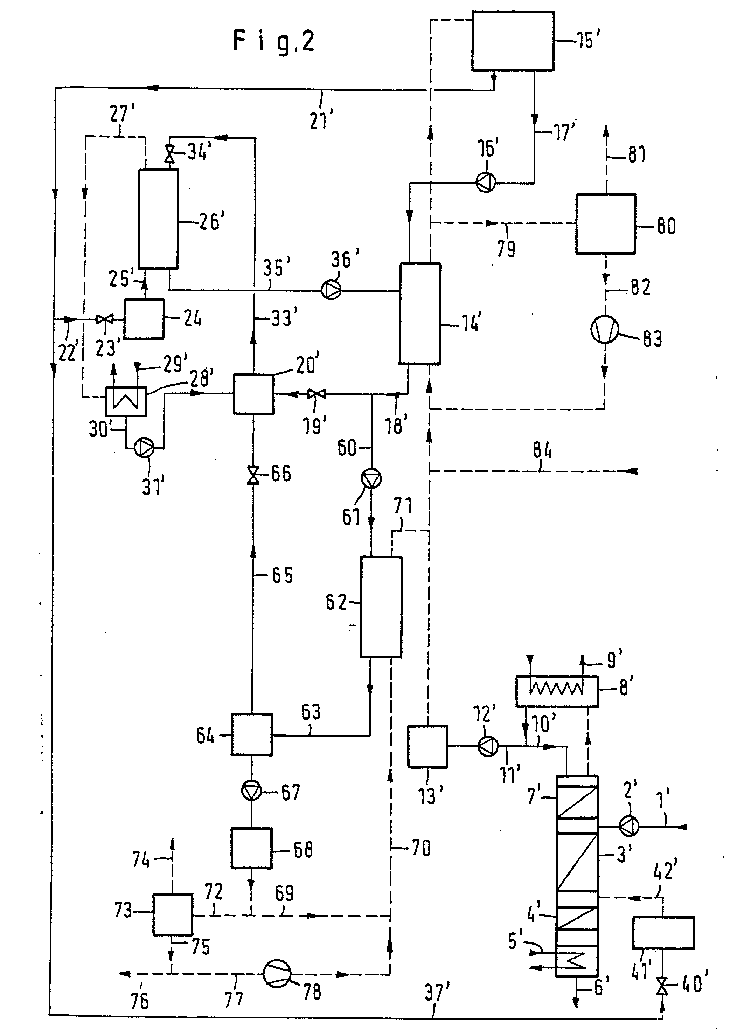

Fig. 2 zeigt, wie bereits erwähnt, ein Fließschema für ein Verfahren, bei welchem als Hauptprodukt ebenfalls weitgehend an Deuterium und Tritium verarmtes Wasser erzeugt wird. Als weiteres Produkt wird an Deuterium und Tritium angereicherter Wasserstoff gewonnen und als drittes Produkt an $^{15}$N angereicherter Stickstoff erzeugt.

Die mit der Anlage zur Durchführung eines Verfahrens entsprechend der Fig. 1 übereinstimmenden Anlagenelemente in Fig. 2 sind zur Vermeidung von Wiederholungen mit den gleichen Bezugsziffern bezeichnet, die jedoch mit einem Apostroph versehen sind.

Ihre Funktionsweise entspricht derjenigen der Fig. 1. So wird in eine Austauschkolonne 3' z.B. Flußwasser oder deuterium- und tritiumhaltiges Abwasser eingeleitet und als mindestens weitgehend von Deuterium und Tritium befreites Wasser durch Leitung 6 entnommen.

Die Gesamtanlage ist ebenfalls unabhängig von einer Syntheseanlage zur industriellen Erzeugung von Ammoniak.

Anstelle der Anlage gemäß Fig. 1 wird bei einer Anlage entsprechend der Fig. 2 kein katalysatorfreies an Deuterium und Tritium angereichertes Ammoniak entnommen und zur Erzeugung von deuterium- und tritiumhaltigem Wasser dienendes Austauschmittel verwendet.

Abweichend von dieser Maßnahme wird im vorliegenden Fall durch eine mit der Leitung 18' verbundene Leitung 60 eine äquivalente Menge von flüssigem Ammoniak entnommen, welches noch gelösten Katalysator enthält, und durch eine Pumpe 61 in einen Isotopenaustauschturm 62 gefördert. In letzterem wird das flüssige Ammoniak mit an Deuterium und Tritium angereicherten Synthesegasgemisch ($N_2 + 3H_2$) im Gegenstrom in Isotopenaustausch gebracht, wobei sich das Ammoniak und der Katalysator an Deuterium und Tritium anreichert und zwar eventuell bis zu reinem $ND_3$ bzw. reinem $NT_3$, während sich das Synthesegasgemisch an $^{15}$N anreichert.

Die im Isotopenaustauschturm 62 an Deuterium und Tritium und an $^{15}$N abgereicherte Flüssigkeit strömt durch eine Leitung 63 in einen Konzentrator 64, der ähnlich wie der Konzentrator 20 (Fig. 1) bzw. 20' (Fig. 2) ausgebildet ist.

Im Konzentrator 64 werden zwei Ströme erzeugt, und zwar ein Flüssigkeitsstrom mit einem höheren Katalysatorgehalt als der den Austauschturm 62 verlassende Flüssigkeitsstrom. Dieser Flüssigkeitsstrom ist an Deuterium und Tritium angereichert und enthält eventuell $ND_3$ und/oder $NT_3$ und ist an $^{15}$N verarmt, eventuell sogar vollständig $^{15}$N frei und wird durch eine Leitung 65 nach Entspannung in einem Drosselventil 66 in einen Konzentrator 20' eingeleitet, dessen Arbeitsweise derjenigen des Konzentrators 20 in Fig. 1 entspricht.

Ein zweiter, im Konzentrator 64 entstandener Flüssigkeitsstrom besteht aus $NH_3$ bzw. $ND_3$ und/oder $NT_3$ und ist frei von Katalysator. Außerdem ist es an $^{15}$N verarmt oder sogar völlig frei von $^{15}$N.

Dieser zweite Strom wird von einer Pumpe 67 in einen Cracking-Ofen 68 gefördert und hierin in $N_2 + 3H_2$ bzw. $N_2 + 3D_2$ und/oder $N_2 + 3T_2$ zerlegt.

Die Hauptmenge dieser Gase wird durch Leitungen 69 und 70 in den Isotopenaustauschturm 62 zurückgeführt und dort in der vorstehend beschriebenen Weise an- $^{15}$N an- und an Deuterium und Tritium abgereichert. Das Gas wird anschließend durch eine Leitung 71 mit dem aus dem Cracking-Ofen 13' stammenden Synthesegas zusammengeführt.

Die restliche Menge der im Cracking-Ofen 68 erzeugten Spaltprodukte wird durch eine Leitung 72 in eine Wasserstoff-Stickstoff-Trennanlage 73 bekannter Bauart eingeleitet. Z.B. kann der in der Trennanlage stattfindende Prozeß mit Hilfe einer Tieftemperaturtrennung durch Verflüssigung und Destillation oder durch alternierende, selektive Absorption oder durch selektiv permeable Membrane erfolgen.

In der Trennanlage 73 wird das eingeleitete Gasgemisch in Stickstoff und Wasserstoff zerlegt, wobei durch die Leitung 74 an $^{15}N$ verarmter bzw. $^{15}N$ freier wasserstofffreier Stickstoff entnommen wird. Dieser Stickstoff kann für industrielle Zwecke weiter verwendet werden.

Ein Teil des durch die Leitung 75 entnommenen stickstofffreien Wasserstoffs, der an Deuterium und Tritium angereichert ist, kann durch Leitung 76 als Produkt entnommen werden. Es besteht dann die Möglichkeit, dieses Produkt in nicht dargestellter Weise durch mindestens eine weitere, nachgeschaltete Stufe an Deuterium bzw. Tritium anzureichern.

Eine andere Möglichkeit besteht darin, das Produkt mit Sauerstoff zu deuterium- bzw. tritiumhaltigem Wasser zu verbrennen. Der restliche Teilstrom wird durch eine Leitung 77 mittels eines Kompressors 78 rezirkuliert und dem Teilstrom aus Leitung 69 zugemischt, wobei das Gasgemisch durch Leitung 70 in den Austauschturm 62 eingeleitet wird.

Das durch Leitung 37' an Deuterium und Tritium verarmte, aber an $^{15}N$ angereicherte Ammoniak wird analog zu Fig. 1 entspannt, verdampft und als Austauschmittel mit Flußwasser oder deuterium- oder tritiumhaltigem Flußwasser in Isotopenaustausch gebracht, so daß die Leitung 11' von Ammoniak durchströmt wird, welches an $^{15}N$ angereichert ist, wobei der Deuterium- und Tritium-Gehalt der Deuterium- und Tritium-Konzentration des Speisewassers entspricht.

Die $^{15}N$-Konzentration des im Cracking-Ofen 13' erzeugten Synthesegasgemisches ist bei seinem Austritt aus dem Isotopenaustauschturm 14' relativ hoch, und zwar aufgrund der $^{15}N$-Anreicherung des aus dem Austauschturm 62 herausgeführten Gasstromes, welcher dem aus dem Cracking-Ofen 13' entnommenen Synthesegas zugemischt wird, vor dem Eintritt in den Austauschturm 14'.

Ein Teil des an Deuterium und Tritium verarmten Synthesegases wird nach dem Austauschturm 14 durch eine Leitung 79 von dem der Ammoniak-Synthese-Anlage 15' zugeführten Gas abgezweigt und in eine Wasserstoff-Stickstoff-Trennanlage 80 bekannter Bauart eingeleitet.

Das Gasgemisch wird in der Trennanlage, die z.B. wie die Trennanlage 73 ausgebildet sein kann, in zwei Ströme zerlegt.

Ein erster, an $^{15}N$ angereicherter Stickstoff-Strom, der vorzugsweise wasserstofffrei ist, wird durch eine Leitung 81 entnommen.

Ein zweiter Gasstrom, der vorwiegend aus Wasserstoff besteht (aber nicht unbedingt stickstofffrei ist), wird durch Leitung 82 mittels eines Kompressors 83 dem in den Austauschturm eingeleiteten Gasstrom zugemischt.

Zur Kompensation des durch Leitung 81 aus der Anlage entnommenen Produktstromes und des durch Leitung 74 entnommenen Stickstoffs wird im Ausführungsbeispiel Stickstoff mit natürlicher Konzentration an $^{15}N$ durch die Leitung 84 in die Anlage eingespeist.

Die Leitung 84 könnte auch alternativ nicht am Eintritt in den Austauschturm 14', sondern auch an den Gaseintritt des Austauschturmes 62 angeschlossen sein. Die Einspritzstelle von frischem Stickstoff hängt von der Prozeßoptimierung ab und besonders von dem gewünschten Verhältnis der Produkte $^{15}N$, Deuterium und Tritium.

Zusammenfassend ist festzustellen, daß im Ausführungsbeispiel gemäß Fig. 2 ein Verbrauch von Flußwasser oder deuterium- und tritiumhaltigem Abwasser und Stickstoffgas stattfindet, während als Hauptprodukte durch Leitung 6' an Deuterium und Tritium mindestens weitgehend befreites Wasser, durch Leitung 81 an $^{15}N$ angereicherter Stickstoff und durch Leitung 76 an Deuterium und Tritium angereicherter Wasserstoff entnommen werden und an $^{15}N$ verarmter Stickstoff als Nebenprodukt entsteht, der durch Leitung 74 entnommen wird.

Es tritt nur ein äußerst geringer Verbrauch von Ammoniak im wesentlichen aufgrund von undichten Stellen in der Anlage auf.

Abschließend sei noch darauf hingewiesen, daß es von Vorteil sein kann, mehrere identische Anlagen, sei es gemäß Fig. 1 oder sei es gemäß Fig. 2 in Serie zu schalten, um je nach Bedarf Produkte, die an den betreffenden Isotopen starken an- oder stärker abgereichert sind, zu gewinnen.

Eine solche Serienschaltung kann auch durch eine periodische Betriebsweise einer einzigen Anlage ersetzt werden, wobei mindestens ein Produkt einer Periode als Speisung der anschließenden Periode verwendet werden.

Werden absolut reine Produkte, wie z.B. von Deuterium und Tritium vollständig befreites Wasser, reines Isotop $^{15}N$ usw. benötigt, so können auch den Produktentnahmen geeignete Endanreicherungs- oder Abreicherungsstufen, wie sie in der Praxis üblich sind, nachgeschaltet werden.

Zahlenbeispiel

Anlage für die gleichzeitige Abreicherung von Deuterium und Tritium und die Gewinnung von an Deuterium angereichertem Wasser bzw. Schwerwasser.

Angenommene Leistungen:
1. Tritiumentfernung aus Abwasser:

3000 m³/Jahr Abwasser mit 200 Ci/m³ Tritiumgehalt, das aus einer Kernbrennstoffwiederaufbereitungsanlage von 1400 t/Jahr anfällt, soll auf die nach Gesetz erlaubte Konzentration von 0.03 Ci/m³ gebracht werden.
2. Deuteriumfreies Wasser:

300 m³/h Wasser mit weniger als 10 ppm D/D+H soll für landwirtschaftliche Zwecke produziert werden. Die Tritiumkonzentration soll unter 0.03 Ci/m³ liegen.
3. Schwerwasser:

Die Anlage sollte möglichst viel an Deuterium angereichertes Wasser oder $D_2O$ produzieren.

Lösung der Aufgabenstellung:

3000 m³/Jahr Abwasser oder 375 kg/h Abwasser mit 200 Ci/m³ $T_2O$ und 150 ppm D/D+H werden zuerst mit 299 625 kg/h Flußwasser mit 150 ppm D/D+H gemischt, um einen Strom von 30 000 kg/h Wasser mit 0.25 Ci/m³ $T_2O$ und 150 ppm D/D + H zu bilden.

Dieses Wasser wird als Speisung verwendet (vergl. Fig. 1, Bezugsziffer «1» und Fig. 2, Bezugsziffer «1'») für eine Anlage zur Durchführung eines Verfahrens gemäß Anspruch 1.

Die folgende Tabelle zeigt Zahlenbeispiele für drei Fälle. Die Fälle I und II entsprechen allen Merkmalen des Anspruchs 1, indem der Ammoniak-Moldurchsatz (vergl. Zeile «e») größer ist als zwei Drittel des Wasser-Moldurchsatzes (vergl. Zeile «b»). Der Fall III entspricht nicht den vorgenannten Bedingungen, indem der Ammoniak-Moldurchsatz kleiner als zwei Drittel des Wasserdurchsatzes ist.

| Fall | I | II | III |
|---|---|---|---|
| Durchsatz in der Leitung 1 | | | |
| a) in kg/h $H_2O$ | 300 000 | 300 000 | 300 000 |
| b) in kmol/h $H_2O$ | 16 666 | 16 666 | 16 666 |
| c) in kmol/h H | 33 332 | 33 332 | 33 332 |
| Durchsatz in der Leitung 40 bzw. 42' | | | |
| d) in kg/h $NH_3$ | 255 000 | 217 600 | 164 220 |
| e) in kmol/h $NH_3$ | 15 000 | 12 800 | 9 660 |
| f) in kmol/h H | 45 000 | 38 400 | 28 980 |
| Temperatur der Kolonne 3 bzw. 3' (°C) | 130 | 130 | 130 |
| Druck der Kolonne 3 bzw. 3' (bar) | 20 | 20 | 20 |
| $NH_3$-Rücklauf aus der Kolonne 7 bzw. 7' | | | |
| g) in kg/h $NH_3$ | 165 642 | 163 332.49 | 160 036.042 |
| h) in kmol/h H | 29 230.96 | 28 823.38 | 28 241.65 |
| $H_2O$-Strippingdampf aus der Kolonne 7 bzw. 7' | | | |
| i) in kg/h $H_2O$ | 51 989.42 | 47 081.54 | 40 076.589 |
| j) in kmol/h H | 5 776.608 | 5 231.282 | 4 452.954 |
| k) Wasserstoff-atomdurchsatz in der Flüssigkeit der Kolonne 3 bzw. 3' kmol/h H (Summe c) + h) + j)) | 68 339.57 | 67 386.6634 | 66 026.609 |
| l) Wasserstoff-atomdurchsatz in dem in 3 bzw. 3' aufsteigenden Dampf kmol/h (Summe f) + h) + j)) | 80 007.57 | 72 454.6634 | 67 674.609 |
| Trennfaktor für die Isotopenaustauschreaktion $NH_3 + HDO \rightarrow NH_2D + H_2O$ bei 130°C | 0.996 | 0.996 | 0.996 |
| Trennfaktor für die Isotopenaustauschreaktion $NH_3 + HTO \rightarrow NH_2T + H_2O$ bei 130°C | 0.98 | 0.98 | 0.98 |

Tabelle (Fortsetzung)

| Fall | I | II | II |
|---|---|---|---|
| Anzahl isotopischer Trennstufen | 20 | 20 | 50 |
| Angenommener Wirkungsgrad dieser Stufen (%) | 100 | 100 | 100 |
| Deuteriumkonzentrationen in (ppm D/D+H) | | | |
| – in der Leitung 1 bzw. 1' | 150 | 150 | 150 |
| – in der Leitung 40 (Fig. 1) bzw. 42' (Fig. 2) | 8.79 | 5.207 | 1.2252 |
| – am Dampfeintritt in 3 bzw. 3' | 9.32 | 7.46 | 11.178 |
| – am Dampfaustritt aus 3 bzw. 3' | 112.49 | 126.7303 | 150.7476 |
| – am Flüssigkeitseintritt in 3 bzw. 3' | 130.785 | 138.2404 | 150.370207 |
| – am Flüssigkeitsaustritt aus 3 bzw. 3' | 10 | 10 | 20 |
| Tritiumkonzentrationen in mCi/kmol H | | | |
| – in der Leitung 1 bzw. 1' | 2.25 | 2.25 | 2.25 |
| – in der Leitung 40 bzw. 42' | 0.265 | 0.2228 | 0.045 |
| – am Dampfeintritt in 3 bzw. 3' | 0.2672 | 0.245 | 0.1643 |
| – am Dampfaustritt aus 3 bzw. 3' | 1.7311 | 1.9415 | 2.32239 |
| – am Flüssigkeitseintritt in 3 bzw. 3' | 1.98394 | 2.0941 | 2.2858967 |
| – am Flüssigkeitsaustritt aus 3 bzw. 3' | 0.27 | 0.27 | 0.27 |
| Tritiumkonzentrationen in Wasser Ci/m$^3$ | | | |
| – in der Leitung 1 bzw. 1' | 0.25 | 0.25 | 0.25 |
| – in der Leitung 6 bzw. 6' (Produkt) | 0.03 | 0.03 | 0.03 |
| Schwerwasserextraktion entsprechend kg/h D$_2$O | 46.66 | 46.66 | 43.33 |

Aus dem Zahlenbeispiel geht hervor, daß man das Speisewasser bis auf 10 ppm abreichern kann mit nur 20 Trennstufen, wenn die Moldurchsätze entsprechend dem Kennzeichen des Anspruchs 1 gewählt sind (Fall I und II).

Die entsprechenden Konzentrationen in der Leitung 40 (Fig. 1) bzw. 42' (Fig. 2) sind 8,79 und 5,207 ppm, was einem Abreicherungsfaktor von 12,8 (Fall I) und 24,3 (Fall II) in dem Turm 14 bzw. 14' entspricht. Der Fall III, der die Angaben bezüglich des Moldurchsatzes gemäß Anspruch 1 nicht erfüllt, kann überhaupt nicht die vorgeschlagene Abreicherung auf 10 ppm erreichen.

Selbst um 20 ppm zu erreichen, brauchte man gemäß Zahlenbeispiel 50 Trennstufen anstatt 20.

Die Konzentration in der Leitung 40 (Fig. 1) bzw. 42' (Fig. 2) ist im Fall III 1,2252 ppm, was einem Abreicherungsfaktor von 123 entspricht.

Ähnliche Verhältnisse gelten für Tritium, wie aus der Tabelle ersichtlich ist.

**Patentansprüche**

1. Verfahren zur Abtrennung von mindestens einem schweren Isotop einer Wasserstoff enthaltenden Verbindung oder eines Wasserstoff enthaltenden Gemisches unter Verwendung einer Ammoniaksynthese und einem Wasserstoff-Stickstoffgemisch, dadurch gekennzeichnet, daß in einem ersten Verfahrensschritt deuterium- und tritiumhaltiges Wasser mit an Tritium und Deuterium verarmten Ammoniakdampf in Isotopenaustausch gebracht wird, wobei der Ammoniak-Moldurchsatz größer gewählt wird als zwei Drittel des Wasser-Moldurchsatzes, und während des Isotopenaustausches zwischen den beiden Strömen das Wasser nahezu vollständig an Tritium und Deuterium verarmt und als Produkt gewonnen wird, während der Ammoniakdampf sich an Deuterium und Tritium anreichert, jedoch am Ende des ersten Verfahrensschrittes eine geringere Konzentration an Deuterium und Tritium als das in Isotopenaustausch gebrachte Wasser aufweist, und daß sodann der Ammoniakdampf verflüssigt und in einem zweiten Verfahrensschritt in ein Wasserstoff und Stickstoff bestehendes Gemisch aufgespalten wird, und daß in einem dritten Verfahrensschritt das Gasgemisch durch Isotopenaustausch mit flüssigem, an Deuterium und Tritium verarmten Ammoniak an Deuterium und Tritium abgereichert wird, wobei das flüssige Ammoniak aus dem abgereicherten Gasgemisch durch Synthetisierung entstanden ist und einen gelösten Katalysator enthält, und wobei eine Teilmenge des synthetisierten Ammoniaks verdampft und in den ersten Verfahrensschritt als Austauschstrom zurückgeführt wird, während die andere Teilmenge des im dritten Verfahrensschritt angereicherten Ammoniaks weiter verarbeitet wird.

2. Verfahren nach Anspruch 1, dadurch gekennzeichnet, daß die an Deuterium und Tritium angereicherte Teilmenge des Ammoniaks verdampft und in Isotopenaustausch mit einem zweiten Wasserstrom gebracht wird, wobei das Wasser an Tritium und Deuterium angereichert und als Nebenprodukt gewonnen wird, und daß der an Deuterium und Tritium abgereicherte Ammoniakdampf verflüssigt und mit dem, aus dem ersten Verfahrensschritt stammenden Ammoniak vor seiner Aufspaltung in Wasserstoff und Stickstoff zusammengeführt wird.

3. Verfahren nach Anspruch 1, dadurch gekennzeichnet, daß mindestens eine Teilmenge des an Deuterium und Tritium angereicherten flüssigen Ammoniaks mit einem zweiten, an Deuterium und Tritium angereicherten Gasgemisch aus Wasserstoff und Stickstoff in Isotopenaustausch gebracht wird und hierbei an Deuterium und Tritium weiter angereichert wird, wobei das zweite Gasgemisch aus der Spaltung des angereicherten Ammoniaks entstanden ist, wobei eine Teilmenge dieses Gasgemisches als an Deuterium und Tritium angereichertes Nebenprodukt anfällt, und daß die während des Isotopenaustausches an Deuterium und Tritium abgereicherte Teilmenge des Gasgemisches mit dem Gasgemisch, welches nach dem ersten Verfahrensschritt verflüssigt und in Wasserstoff und Stickstoff aufgespalten ist, zusammengeführt wird.

4. Verfahren nach Anspruch 3, dadurch gekennzeichnet, daß das an Deuterium und Tritium angereicherte Nebenprodukt in Stickstoff und an Deuterium und Tritium angereicherten Wasserstoff aufgespalten wird, und mindestens teilweise in reinen Stickstoff und reinen Wasserstoff getrennt wird, wobei der reine Stickstoff entfernt wird, und eine Teilmenge des an Deuterium und Tritium angereicherten Wasserstoffs als Ausgangsprodukt für eine weitere Verarbeitung verwendet wird, während die größere Teilmenge mit dem zweiten Gasgemisch zusammengeführt wird, und daß weiterhin vor dem dritten Verfahrensschritt Stickstoff mit natürlicher $^{15}N$ Konzentration mit dem ersten Gasgemisch zusammengeführt wird und nach dem dritten Verfahrensschritt eine Teilmenge des sich während des Isotopenaustausches an $^{15}N$ angereicherten Gasgemisches in an $^{15}N$ angereicherten Stickstoff und in einen, im wesentlichen aus Wasserstoff bestehenden Strom zerlegt wird, welcher wieder in den Gasgemischstrom vor dem dritten Verfahrensschritt zurückgeführt wird, während der an $^{15}N$ angereicherte Stickstoff als (Neben)produkt gewonnen wird.

**Claims**

1. A process for separating at least one heavy isotope from a compound containing hydrogen or from a mixture containing hydrogen, using an ammonia synthesis and a mixture of hydrogen and nitrogen, characterised in that in a first step of the process water containing deuterium and tritium is brought into isotopic exchange with ammonia vapour depleted of tritium and deuterium, the molar throughput of ammonia being chosen to be more than two-thirds the molar throughput of water, and during the isotopic exchange between the two streams the water is virtually entirely depleted of tritium and deuterium and is recovered as the produkt, whereas the ammonia vapour becomes enriched with deuterium and tritium, but by the end of the first step of the process has a lesser concentration of deuterium and tritium than the water brought into isotopic exchange, and in that the ammonia vapour is then liquefied and in a second step of the process is broken down into a mixture comprising hydrogen and nitrogen, and in that in a third step of the process the gas mixture is depleted of deuterium and tritium by isotopic exchange with liquid ammonia that has been depleted of deuterium and tritium, the liquid ammonia having been obtained by synthesisation from the depleted gas mixture and containing a dissolved catalyst, and one portion of the synthesised ammonia being evaporated and returned as the exchange stream to the first stage of the process, whereas the other portion of the ammonia enriched in the third step of the process is processed further.

2. The process according to claim 1, characterised in that the portion of ammonia that has been enriched with deuterium and tritium is evaporated and brought into isotopic exchange with a second stream of water, the water being enriched with tritium and deuterium and recovered as a by-product, and in that the ammonia vapour that has been depleted of deuterium and tritium is liquefied and combined with the ammonia from the first step of the process before its breakdown into hydrogen and nitrogen.

3. The process according to claim 1, characterised in that at least one portion of the liquid ammonia that has been enriched with deuterium and tritium is brought into isotopic exchange with a second gas mixture of hydrogen and nitrogen that has been enriched with deuterium and tritium, and in doing so is further enriched with deuterium and tritium, the second gas mixture having resulted from breaking down the enriched ammonia, one portion of said gas mixture being produced as a deuterium and tritium enriched by-product, and in that the portion of the gas mixture that was depleted of deuterium and tritium during the isotopic exchange is combined with the gas mixture that was liquefied after the first step of the process and split into hydrogen and nitrogen.

4. The process according to claim 3, characterised in that the deuterium and tritium enriched by-product is split into nitrogen and into hydrogen enriched with deuterium and tritium, and at least partially separated into pure nitrogen and pure hydrogen, the pure nitrogen being removed, and one portion of the deuterium and tritium enriched hydrogen is used as the starting product for a further processing operation, while the larger portion is combined with the second gas mixture, and in that furthermore before the third step of the process nitrogen with a natural $^{15}N$ concentration is combined with the first gas mixture and after the third step of the process one portion of the gas mixture that became enriched with $^{15}N$ during the isotopic exchange is broken down into nitrogen enriched with $^{15}N$ and into a stream consisting essentially of hydrogen, which stream is returned once more to the gas mixture stream before the third step of the process, while the nitrogen enriched with $^{15}N$ is recovered as a (by-)product.

## Revendications

1. Procédé de séparation d'au moins un isotope lourd d'un composé contenant de l'hydrogène ou d'un mélange contenant de l'hydrogène, utilisant une synthèse de l'ammoniac et un mélange hydrogène-azote, caractérisé en ce que dans une première étape, on met en relation d'échange isotopique de l'eau contenant du deutérium et du tritium avec de la vapeur d'ammoniac appauvrie en tritium et en deutérium, en choisissant le débit molaire d'ammoniac supérieur aux deux tiers du débit molaire d'eau, et pendant l'échange isotopique entre les deux courants, l'eau est appauvrie à peu près totalement en tritium et en deutérium et est obtenue comme produit, tandis que la vapeur d'ammoniac s'enrichit en deutérium et en tritium, mais présente à la fin de la première étape du procédé une concentration en deutérium et tritium plus faible que celle de l'eau mise en échange isotopique; en ce que la vapeur d'ammoniac est ensuite liquéfiée et fractionnée dans une deuxième étape du procédé en un mélange contenant de l'hydrogène et de l'azote, et en ce que le mélange gazeux, dans une troisième étape, est appauvri en deutérium et en tritium par échange isotopique avec de l'ammoniac liquide appauvri en deutérium et tritium, l'ammoniac liquide étant produit par voie de synthèse à partir du mélange gazeux appauvri et contenant un catalyseur dissous, et une fraction de l'ammoniac synthétisé est vaporisée et recyclée comme courant d'échange dans la première étape du procédé, tandis qu'est poursuivi le traitement de l'autre fraction de l'ammoniac enrichi dans la troisième étape.

2. Procédé suivant la revendication 1, caractérisé en ce que la fraction d'ammoniac enrichie en deutérium et en tritium est vaporisée et est mise en relation d'échange isotopique avec un second courant d'eau, l'eau étant enrichie en tritium et en deutérium et étant obtenue comme sous-produit et en ce que la vapeur d'ammoniac appauvrie en deutérium et en tritium est liquéfiée et est réunie avec l'ammoniac provenant de la première étape du procédé, avant son fractionnement en hydrogène et azote.

3. Procédé suivant la revendication 1, caractérisé en ce qu'une fraction au moins de l'ammoniac liquide enrichi en deutérium et en tritium est mise en relation d'échange isotopique avec un second mélange gazeux enrichi en deutérium et en tritium et formé d'hydrogène et d'azote, et l'enrichissement en deutérium et en tritium est alors poursuivi avec production du second mélange gazeux résultant du fractionnement de l'ammoniac enrichi, une fraction de ce mélange gazeux étant obtenue comme sous-produit enrichi en deutérium et en tritium, et en ce que la fraction du mélange gazeux appauvrie en deutérium et tritium pendant l'échange isotopique est réunie avec le mélange gazeux qui est liquéfié après la première étape du procédé et qui est fractionné en hydrogène et azote.

4. Procédé suivant la revendication 3, caractérisé en ce que le sous-produit enrichi en deutérium et en tritium est fractionné en azote et en hydrogène enrichi en deutérium et en tritium, et est fractionné au moins partiellement en azote pur, qui est éliminé, et en hydrogène pur, et une fraction de l'hydrogène enrichi en deutérium et en tritium est utilisée comme matière de départ pour une autre mise en œuvre, tandis que la fraction la plus grande est réunie avec le second mélange gazeux, et en ce que de l'azote ayant une concentration naturelle en $^{15}N$ est en outre réuni avant la troisième étape du procédé avec le premier mélange gazeux et, après la troisième étape du procédé, une fraction du mélange gazeux s'enrichissant en $^{15}N$ pendant l'échange isotopique est décomposée en azote enrichi en $^{15}N$ et en un courant principalement constitué d'hydrogène, qui est recyclé au courant de mélange gazeux avant la troisième étape du procédé, tandis que l'azote enrichi en $^{15}N$ est obtenu comme produit ou sous-produit.

Fig.1

EP 0 130 274 B1

# Fig.2